# EUROPEAN PATENT APPLICATION

(11) **EP 1 519 119 A2**
(43) Date of publication of application: **30.03.2005**
(21) Application number: 04016862.7
(22) Date of filing: 16.07.2004
(51) Int. Cl.: F24F 13/10

(54) **Shutter particularly for climate control units**

(30) Priority: 23.09.2003 IT pd20030221
(71) Applicant: Liebert Hiross S.p.A., 35028 Piove di Sacco, (Prov. of Padova) (IT)
(72) Inventor: Michieli, Stefano, 35020 S. Angelo di Piove, Prov.of Padova (IT); Dalla Zuanna, Andrea, 35100 Padova (IT)
(74) Representative: Modiano, Guido, Dr.-Ing.

(57) **Abstract**

A shutter particularly for climate control units of the type provided with the free cooling option, comprising at least one first intake (11) for the air that arrives from the outside environment, at least one second intake (12) for the air that arrives from the inside environment, and an outlet (13) on ventilation means (14); the degree of opening of the at least one first intake (11) and the at least one second intake (12) is controlled by flow control means (15), which are moved by an actuator (16) managed by electronic control means (17). The shutter further comprises a first drum (18), which is open onto the ventilation means (14) and is provided with the at least one first intake (11) on its bottom (19) and with the at least one second intake (12) on its lateral surface (20). The flow control means (15) are constituted by a complementarily shaped second drum (21), which is inserted in the first drum (18) and is connected thereto by relative rotation means (22), which are suitable to determine selectively one of the following configurations:
-- first intakes (11) closed and second intakes (12) open;
-- first intakes (11) open and second intakes (12) closed;
-- first intakes (11) and second intakes (12) partially open.

## Description

The present invention relates to a shutter particularly for climate control units of the type provided with free cooling option.

Air conditioning devices provided with the option known as "free cooling" are currently known in the field of climate control of enclosed spaces ranging from industrial facilities to offices to private dwellings and the like.

The free cooling option is based on the ability of the climate control unit to use, for the conditioning of an enclosed space, external air when the air has a higher enthalpy than the air of the internal enclosed space.

Free cooling allows considerable energy saving on the part of the user, in addition to a healthier management of the air of the internal enclosed space, which is changed appropriately by activating free cooling.

In known climate control units, transition from operation with the compressor active to free-cooling operation occurs by way of a tilting shutter, which is suitable to divert, in a first configuration, toward the evaporator and toward the associated fan the air that arrives from inside, in the case of operation while the compressor is running or, in a second configuration, the air from the outside environment in the case of free-cooling operation.

The shutter, while performing fully the function for which it is designed, requires a substantial installation volume, in the overall compactness of a climate control unit, the casing of which generally also comprises a condenser, a fan for the condenser, a compressor, an evaporator and a fan for the evaporator.

This substantial volume is determined by the tilting motion of the shutter, whose rotation must be such as to allow the passage of a given air flow from the outside inward and from the inside outward. The aim of the present invention is to provide a shutter that is more compact than known types of shutter.

Within this aim, an object of the present invention is to provide a shutter that allows a more compact installation of the components of a climate control unit inside the casing thereof.

Another object of the present invention is to provide a shutter in which the degree of opening/closure can be controlled easily by means of actuators of a known type.

Another object of the present invention is to provide a shutter that is capable of ensuring a performance that is not inferior to that of known types of shutter.

Another object of the present invention is to provide a shutter that can be manufactured at low cost with known facilities and technologies.

This aim and these and other objects that will become better apparent hereinafter are achieved by a shutter particularly for climate control units of the type provided with the free cooling option, comprising at least one first intake for the air that arrives from the outside environment, at least one second intake for the air that arrives from the inside environment, and an outlet on ventilation means that are directed inward, the degree of opening of said at least one first intake and said at least one second intake being controlled by flow control means, which are moved by an actuator managed by electronic control means, said shutter being characterized in that it is formed by a first drum, which is open onto said ventilation means and is provided with said at least one first intake on the bottom and said at least one second intake on the lateral surface, said flow control means being constituted by a complementarily shaped second drum, which is inserted in said first drum and is connected thereto by way of relative rotation means, which are suitable to determine selectively one of the following configurations:
-- first intake closed and second intake open;
-- first intake open and second intake closed;
-- first intake and second intake partially open.

Further characteristics and advantages of the invention will become better apparent from the following detailed description of a preferred but not exclusive embodiment thereof, illustrated by way of nonlimiting example in the accompanying drawings, wherein:

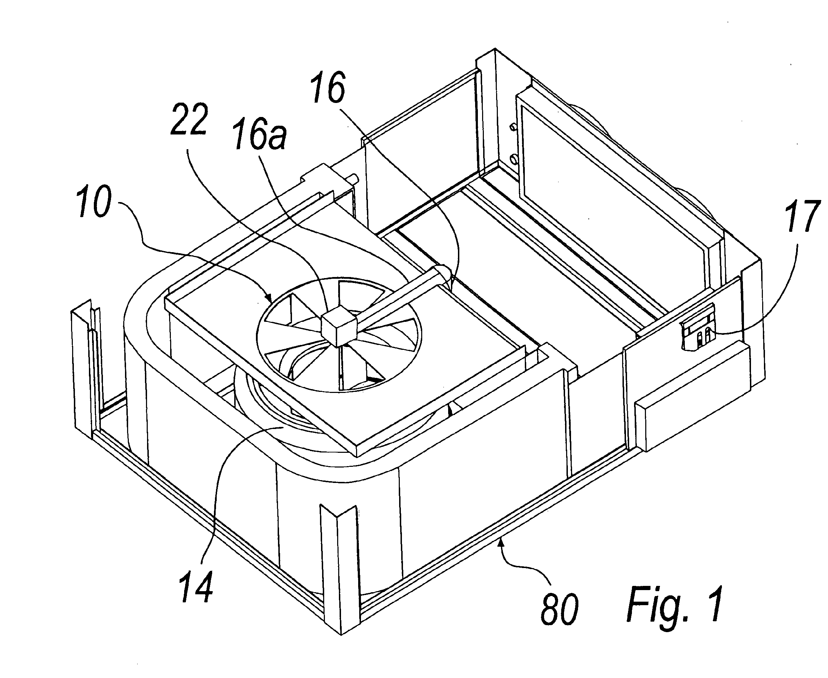

Figure 1 is a perspective view of a climate control unit comprising a shutter according to the invention;

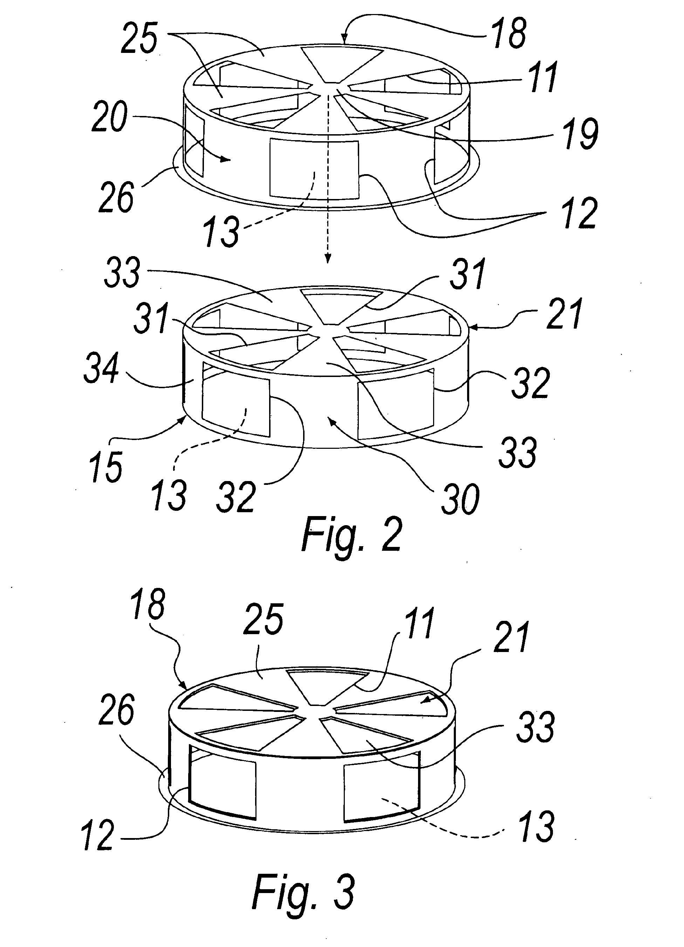

Figure 2 is an exploded perspective view of a shutter according to the invention;
Figure 3 is a perspective view of a shutter according to the invention;
Figure 4 is a perspective view of a shutter according to the invention, applied to ventilation means in a first functional configuration;
Figure 5 is a perspective view of a shutter according to the invention, applied to ventilation means in a second functional configuration;
Figure 6 is a perspective view of a shutter according to the invention, applied to ventilation means in a third functional configuration.

With reference to the figures, a shutter particularly for climate control units of the type provided with the free cooling option according to the invention is generally designated by the reference numeral 10.

The shutter 10, arranged inside the casing of a climate control unit 80, comprises at least one and preferably five first intakes 11 for the air that arrives from outside, at least one and preferably five second intakes 12 for the air that arrives from the inside environment, and an outlet 13 on ventilation means 14.

The degree of opening of the first and second intakes 11 and 12 is adjusted by flow control means 15.

The flow control means 15 are moved by an actuator 16, which is managed by electronic control means 17.

The shutter 10 according to the invention is formed by a first substantially cylindrical drum 18, which is open onto the ventilation means 14.

In the first drum 18, the first five intakes 11 are provided on its bottom 19 for an axial air flow and the five second intakes 12 are provided on the lateral surface 20 for a radial flow.

The flow control means 15 are constituted by a complementarily shaped substantially cylindrical second drum 21, which is inserted in the first drum 18 and is connected thereto by way of relative rotation means 22.

The actuator 16 moves the rotation means 22, which in turn act on the second drum 21, which rotates coaxially with respect to the first drum 18.

The position of the second drum 21 with respect to the first drum 18 defines selectively one of the following configurations:
-- with the first intakes 11 closed and the second intakes 12 open;
-- with the first intakes 11 open and the second intakes 12 closed;
-- with the first intakes 11 and the second intakes 12 partially open.

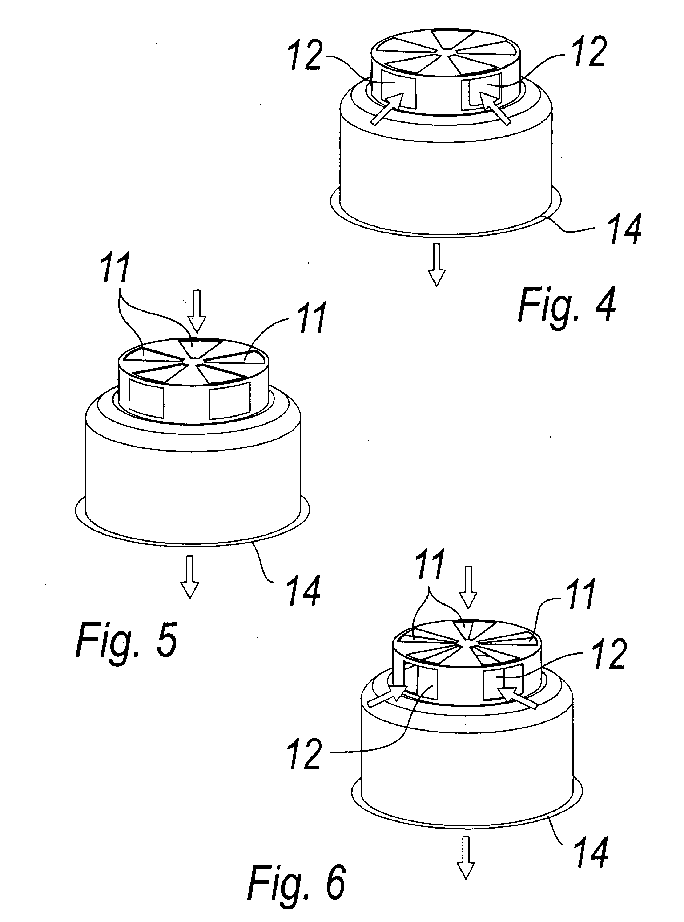

The first configuration, with the first intakes 11 closed and the second intakes 12 open, shown in Figure 4, provides cooling while the compressor, not shown, is active.

The second intakes 12 are in fact open onto the inside environment.

The second configuration, with the first intakes 11 open and the second intakes 12 closed, shown in Figure 5, provides free-cooling operation, therefore with the compressor deactivated.

The first intakes 11 are in fact open onto the outside environment. The third configuration, with the first intakes 11 and the second intakes 12 partially open, shown in Figure 6, provides mixed operation, with the compressor active and with free cooling.

In the embodiment described here, the first five intakes 11 are shaped like an annular sector centered on the rotation axis of the second drum 21, i.e., on the axis of symmetry of both the first drum 18 and the second drum 21, and are angularly mutually equidistant.

Each one of the five second intakes 12 has a rectangular profile, and said intakes also are equidistant on the lateral surface 20 of the first drum 18.

The second intakes 12 are arranged on the lateral surface 20 at the portions 25 of the bottom 19 that are comprised between two consecutive first intakes 11.

The first drum 18 is rigidly connected to the ventilation means 14 by way of its rim 26, so that the air is conveyed toward the intake of the ventilation means 14.

The second drum 21 has, for each one of the first intakes 11 and second intakes 12 of the first drum 18, corresponding first and second ports, designated by the reference numerals 31 and 32 respectively, which allow the flow of air through the first intakes 11 and the second intakes 12.

The second drum 21 further has, adjacent to the first and second ports 31 and 32, respectively first partitions 33 and second partitions 34, which are suitable to prevent or throttle the flow of air through the first intakes 11 and the second intakes 12 following a preset rotation of the second drum 21 with respect to the first drum 18.

The profile of the first and second ports 31 and 32 substantially coincides with the profile, respectively, of the first and second intakes 11 and 12.

Accordingly, the five first ports 31 are shaped like an annular sector, while the five second ports 32 have a rectangular profile that is similar to the profile of the second intakes 12.

In order to allow the closure alternatively of the first intakes 11 or of the second intakes 12, as well as the partial opening of the first intakes 11 and of the second intakes 12, the second ports 32 are arranged, on the lateral surface 30 of the second drum 21, at the first ports 31.

This different relative position of the first intakes 11 and the second intakes 12 with respect to the first ports 31 and second ports 32 allows, for example, by actuating the second drum 21 by way of the actuator 16, to open the first intakes 11 and simultaneously close the second intakes 12.

The rotation to which the second drum 21 is subjected to achieve complete opening or closure of the first intakes 11, as well as of the second intakes 12, is substantially equal to the round angle divided by twice the number of the first intakes 11, or at least to the angle that forms the annular sector that outlines each first intake 11.

For complete closure of the first intakes 11, each one of the partitions 33 between two consecutive first ports 31 has a surface that is at least as large as that of the corresponding first intake 11.

Likewise, the second partitions 34 have a surface that is at least equal to the area of the opening of the corresponding second intakes 12.

In the present embodiment, the actuator 16 is arranged laterally adjacent to the first drum 18 and to the ventilation means 14.

The actuator 16 is functionally connected to the relative rotation means 22 by way of a bar of the worm screw type 16a.

In a second embodiment of the invention, not shown, the actuator 16 is arranged in axial alignment and internally with respect to the first drum 18 and the second drum 21.

The diametrical dimensions of a shutter according to the invention are not larger than those of the ventilation means 14.

A shutter 10 according to the invention, suitable to rotate in a preset volume of space, allows to provide such shutter 10 by arranging it adjacent to the ventilation means 14, with great space saving inside the casing of the climate control unit.

In practice it has been found that the invention thus described solves the problems noted in known types of shutter particularly for climate control units of the type provided with the free cooling option.

In particular, the present invention provides a shutter that is more compact than known types of shutter.

Moreover, the present invention provides a shutter that allows a more compact installation of the components of a climate control unit inside the casing thereof.

Moreover, the present invention provides a shutter whose degree of opening/closure can be controlled easily by way of actuators of a known type.

Moreover, the present invention provides a shutter that can be manufactured at low cost with known facilities and technologies.

The invention thus conceived is susceptible of numerous modifications and variations, all of which are within the scope of the appended claims; all the details may further be replaced with other technically equivalent elements.

In practice, the materials employed, so long as they are compatible with the specific use, as well as the dimensions, may be any according to requirements and to the state of the art.

The disclosures in Italian Patent Application No. PD2003A000221 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A shutter particularly for climate control units of the type provided with the free cooling option, comprising at least one first intake (11) for the air that arrives from the outside environment, at least one second intake (12) for the air that arrives from the inside environment, and an outlet (13) on ventilation means (14), the degree of opening of said at least one first intake (11) and said at least one second intake (12) being controlled by flow control means (15), which are moved by an actuator (16) managed by electronic control means (17), said shutter (10) being **characterized in that** it is formed by a first drum (18), which is open onto said ventilation means ( 14) and is provided with said at least one first intake (11) on its bottom (19) and said at least one second intake (12) on its lateral surface (20), said flow control means (15) being constituted by a complementarily shaped second drum (21), which is inserted in said first drum (18) and is connected thereto by relative rotation means (22), which are suitable to determine selectively one of the following configurations:
-- first intake (11) closed and second intake (12) open;
-- first intake (11) open and second intake (12) closed;
-- first intake (11) and second intake (12) partially open.

2. The shutter according to claim 1, **characterized in that** said first drum (18) is substantially cylindrical.

3. The shutter according to one or more of the preceding claims, **characterized in that** said at least one first intake (11) is shaped like an annular sector.

4. The shutter according to claim 3, **characterized in that** it has, in a substantially angularly equidistant arrangement, five first intakes (11).

5. The shutter according to one or more of the preceding claims, **characterized in that** said at least one second intake (12) has a rectangular profile.

6. The shutter according to claim 5, **characterized in that** it has five second intakes (12) which are substantially equidistant.

7. The shutter according to one or more of the preceding claims, **characterized in that** in said first drum (18) said second intakes (12) are arranged on the lateral surface (20) at the portion (25) of the bottom (19) that is comprised between two consecutive said first intakes (11).

8. The shutter according to one or more of the preceding claims, **characterized in that** said first drum (18) is rigidly coupled to said ventilation means (14) by way of its rim (26).

9. The shutter according to one or more of the preceding claims, **characterized in that** said second drum (21) has, for each one of said first and second intakes (11, 12) of the first drum (18), corresponding first ports (31) and second ports (32), which are suitable to allow the flow of air through said first and second intakes (11, 12), said second drum (21) further having, adjacent to said first and second ports (31, 32), respectively first and second partitions (33, 34), which are adapted to block or throttle the flow of air through said first and second intakes (11, 12) following a preset rotation of said second drum (21) with respect to said first drum (18).

10. The shutter according to claim 9, **characterized in that** the profile of said first and second ports (31, 32) coincides substantially with the profile of said first and second intakes (11, 12) respectively.

11. The shutter according to one or more of claims 9 and 10, **characterized in that** on said second drum (21) said second ports (32) are arranged on the lateral surface (30) at said first ports (31).
